# EUROPEAN PATENT SPECIFICATION

(11) **EP 3 123 072 B1**
(45) Date of publication and mention of the grant of the patent: **09.05.2018**
(21) Application number: 15712589.9
(22) Date of filing: 20.03.2015
(51) Int. Cl.: F16L 59/12

(54) **INSULATION SYSTEM FOR A PIPE**
ISOLIERSYSTEM FÜR EIN ROHR
SYSTÈME D'ISOLATION POUR TUYAU

(30) Priority: 28.03.2014 EP 14162465
(43) Date of publication of application: 01.02.2017
(73) Proprietor: Rockwool International A/S, 2640 Hedehusene (DK); Deutsche Rockwool Mineralwoll GmbH & Co. OHG, 45966 Gladbeck (DE)
(72) Inventor: REICHINGER, Stefan-Ferdinand, 45359 Essen (DE)
(74) Representative: Rausch Wanischeck-Bergmann Brinkmann
(86) International application number: PCT/EP2015/055967
(87) International publication number: WO 2015/144590

(56) References cited:
- EP-A1- 2 599 839
- WO-A1-00/53970
- WO-A1-90/07080
- AU-A- 1 664 083
- DE-A1- 19 726 939

## Description

The invention is related to an insulated pipe assembly. Moreover, the invention is related to a method for insulating a pipe.

In particular, the invention is related to an insulated pipe assembly comprising mineral wool. Mineral wool is a porous, resilient material made of mineral fibres and preferably bonded by a binder. Mineral wool may be stone wool, glass wool, slag wool, etc., and may be manufactured by producing a mineral melt first, spinning fibres from this melt and adding binder to the fibres. The mineral fibres with the binder applied thereon are then formed as a mat of fibres, a fibrous web or the like. The fibrous web may also be processed into pipe sections. These manufacturing processes are well-known in the state of the art.

In particular, the present invention is related to an insulated pipe assembly for pipes conducting fluids having high temperatures, for example 300°C or even more. When such a pipe is insulated with a material comprising fibres and a binder, the problem arises that the binder is burned off due to the high temperatures. This causes the insulation material to loose its high compression strength.

An insulated pipe assembly comprising mineral wool is known from WO 00/53970 A1. This document describes the effect of an exothermic reaction of the binder of the mineral wool due to a high-temperature, which effect is known as punking. The object of WO 00/53970 A1 is to avoid this exothermic reaction of the binder.

For this purpose, WO 00/53970 A1 discloses a pipe having arranged around it insulation layers that are divided into single, air-excludingly closed compartments. This is realized by three features. Firstly, the insulation layers only extend a limited distance in the axial direction of the pipe. Second, between adjacent insulation layers air-excluding separating surfaces are arranged to reduce the supply of oxygen for the exothermic reaction. The separating surfaces may be manufactured from e.g. metal foil. Third, the single compartments of insulation are divided via the use of separating walls.

These separating walls are disc-shaped and comprise several lips on its outer circumference. The separating walls may be arranged adjacent to the insulating layers. The lips of the separating walls may be bent towards the insulation layers to keep them in its position relative to the pipe.

In a first embodiment the separating walls extend from the outer surface of the pipe to the outer surface of the insulation, i. e. the height of the separating walls corresponds to the height of all insulation layers forming the pipe insulation. In a second embodiment, the separating walls extend only over the radial dimension of a single insulation layer. According to this document, this may lead to a more robust structure, but also has several drawbacks, for example more labor during the installation of this arrangement and the fact that separating walls of different dimensions have to be used.

According to WO 00/53970 A1, every insulation layer arranged around another insulation layer is supported by the lower insulation layer. The separating walls are not used to support overlying insulation layers, but to close the single air-excluding insulation compartments. On the outermost insulation layers, no covering with different properties than the separating surfaces between the insulation layers is arranged.

As the separating walls of this document extend from the outer surface of the pipe to the outer surface of the outermost insulating layer they are excellent thermal bridges. Therefore, the present invention is based in the idea that the heat insulation properties may be further improved. One of the problems arising is that the separating walls are needed for the concept of WO 00/53970 A1 to create air-excludingly closed compartments of insulation to reduce the exothermic reaction of the binder in case of high temperatures.

Therefore, the invention is based on the finding that the reduction of the exothermic reaction may be reduced by the concept of WO 00/53970 A1, but it is still possible to increase the heat insulating properties.

Hence, it is an object of the present invention to provide an insulated pipe assembly for a high temperature pipe and an insulated pipe having improved heat insulation properties. Moreover, it is an object of the present invention to propose a method for insulting a high temperature pipe leading to better insulation properties of the insulated pipe.

In terms of the insulated pipe assembly, the invention proposes a pipe comprising an insulation system comprising a first insulation element to form an inner insulation layer around the pipe, wherein the first insulation element comprises mineral wool, and a second insulation element to form an outer insulation layer around the inner insulation layer and support means, wherein
- the first insulation element is arranged on the pipe;
- the support means are arranged on the pipe and adjacent to the first insulation element; and
- the second insulation element is arranged on and supported by the support means arranged on the pipe,
wherein adjacent second insulation elements directly abut on each other in axial direction of the pipe with their end faces.

The pipe to be insulated may have any form. This means a pipe may extend longitudinally, bend in corners and the like. The pipe may be of any material suitable to transport fluids (liquid or gaseous) having high temperatures, for example greater than 300°C.

The inner insulation layer and the outer insulation layer may each consist of a plurality of first insulation elements and second insulation elements. However, often the inner insulation layer or the outer insulation layer or both are made of only one single first insulation element and/or one single second insulation element, such as a pre-shape pipe section or a wired mat.

The first and second insulation elements may have the form of half pipe sections. This means that one single insulation element does not extend all around the pipe, but only around a half of the whole circumference. Pipe sections have better insulation properties and a relatively high compression strength compared to wired mats. The mineral wool insulation elements most often consist of mineral fibres and binder. Therefore, when the insulation elements are exposed to high temperatures (i. e. > 300°C) the binder will be burned off and the insulation elements will loose some of its compression strength.

For this reason, the first insulation elements forming the inner insulation layer around the pipe cannot provide sufficient support to the outer insulation layer. The support means provide this support structure. The support means are arranged on the pipe and adjacent to the first insulation element, in particular between the first insulation elements. The support means overlaps adjacent first insulation elements in axial direction of the pipe. The support means form a kind of channel or duct between its part overlapping the first insulation elements on the one hand and the outer surface of the pipe on the other hand.

The support means may be arranged on the pipe by a form-fit, a force-fit, e.g. by clamping, gluing, welding and/or the like. The support means do not divide adjacent first insulation elements from each other completely, but allow at least parts of the abutting faces of adjacent first insulation elements to touch each other.

The basic idea of the invention is to arrange second insulation elements on the support means forming an outer insulation layer around the inner insulation layer. Therefore, with the invention a multi-layered pipe insulation without the need for the single insulation layers to support each other is provided. The second insulation elements may be laid, adhered, clamped and/or the like on the support means. In particular, an inner surface of the second insulation element is to be brought in contact with the support means.

In particular, the second insulation elements are arranged on an upper surface of the support means extending in axial direction of the pipe. A key feature of the invention is that the second insulation elements are supported by the support means and not only by the first insulation elements. This means that the position of the second insulation elements relative to the pipe is independent of the state of the first insulation elements. For example when the first insulation elements loose a part of its compression strength due to the influence of high temperatures it will not affect the position of the second insulation elements. A drooping or setting of the second insulation elements effected by the loss of compression strength in the first insulation elements can be avoided. With other words, the inner insulation layer is allowed to loose its compression strength, since it shall no longer (alone) support a pipe section arranged around it. Moreover, no further support means are arranged between the second insulation elements. This means that no support means extend along the whole radial extent of the pipe insulation. In particular, the support means do not reach the outer cladding arranged around the second insulation elements. Therefore, thermal bridges and therefore so-called "hot spots" on the outer cladding are avoided, and the risk of skin burning and energy loss through the insulation system in reduced.

The first insulation elements, and preferably also the second insulation elements, comprise fibres and a binder. The fibres may be organic, e.g. made from wood or the like. The fibres may be inorganic, e.g. made from stone, glass, slag and/or the like. The binder may be organic, e.g. an adhesive material, a resin or the like.

In particular, the insulation elements may be made of glass wool, stone wool or the like. Stone wool consists of stone wool fibres and a binder. A composition of stone wool fibres is disclosed in EP 2 599 839 A1 for example. The insulation system may comprise fixation means to protect and hold the outer insulation layer in position. The fixation means may have the form of a mat, a grid, an outer cladding or the like. The outer cladding may be arranged around the outer insulation layer.

Preferably, the support means comprise an outer surface spaced apart from the pipe, on which outer surface the outer insulation layer is supported. The first and second insulation elements are spaced apart from each other in radial direction of the pipe in the area with the support means. In areas without support means, the outer insulation layer may lie against the inner insulation layer.

Preferably the length of the upper surface of the support means in axial direction of the pipe is at least 50%, in particular at least 100%, preferably at least 150% of a thickness of the first and/or second insulation elements. This means the degree of overlapping the first insulation elements by the support means is substantial. The upper surface of the support means provide a major part or all of the support area for the second insulation element This preferred embodiment allows the second insulation elements to be supported mainly on the support means and not on the first insulation elements. The length of the upper surface of the support means may be chosen almost arbitrary, as it is not crucial in terms of heat insulation, because with the second insulation elements another layer of insulation is arranged above the support means.

Preferably, the support means comprises stays protruding radially to the pipe and a curved plate extending axially to the pipe and being connected to the stays, wherein the upper surface is provided by the curved plate. The curved plate extends preferably circumferentially around the pipe and the inner insulation layer. According to this embodiment, the support means may be formed of several parts that preferably are pre-assembled to form the support means. The stays may also be arranged on the pipe first, afterwards the first insulation elements may be arranged adjacent to the stays and in a subsequent step, the curved plate may be arranged on the outer surfaces of the first insulation elements and connected to the stays. Between the stays and the curved plate, an insulation element may be arranged. This insulation element may reduce the effect of the support means being a thermal bridge.

Preferably, the support means extends circumferentially around the pipe. However, it may also extend only in a circular section around the pipe. This means that the support means do not necessarily extend all around the pipe as for example a disc, a ring or the like. Instead, the support means only extend in parts of the circumference around the pipe. This embodiment has the effect that thermal bridges are further reduced. The first insulation elements directly abut on each other in axial direction of the pipe with a large part of its end faces. Only the part of the end faces that is in contact with the stays of the support means does not abut on the end face of an adjacent insulation element.

According to the invention adjacent second insulation elements directly abut on each other in axial direction of the pipe with their end faces. In particular this means that the second insulation elements directly abut on each other with the full area of their end faces. No elements are arranged between the second insulation elements. All of the second insulation elements together form a continuous, integrated insulation layer around the inner insulation layer. Thus, the outer insulation layer is formed as an uninterrupted element or a continuous layer and such a continuous layer will avoid so-called hot-spots on the outer surface of the insulation layer, since there are no heat bridges erecting through the second layer, which is the outer layer. One advantage of the invention is therefore to apply not only a metal outer cladding as described, but also a watertight outer cladding. Such a watertight outer cladding may be a fibreglass reinforced polyester mat which is soft and flexible when applied and which is cured by UV-light after being applied. An example for such a watertight cladding is promoted by ROCKWOOL Technical Insulation under the brand "ProRox GRP 1000" and requires that the surface temperature of the insulation is below 90° C.

Preferably, the insulated pipe assembly comprises axially a plurality of first insulation elements forming the inner insulation layer and a plurality of second insulation elements forming the outer insulation layer, wherein abutting edges of the first insulation elements and abutting edges of the second insulation elements are shifted with respect to the axial direction of the pipe. This means that none of the abutting edges of the first insulation elements and none of the abutting edges of the second insulation elements fall in line axially. An abutting edge of the first insulation elements always encounters a large surface of a second insulation element and an abutting edge of the second insulation elements always encounters a large surface of a first insulation element. With this arrangement, thermal bridges are further avoided, as the abutting edges of first and second insulation elements do never form a continuous gap or plane.

In terms of the method for insulating a pipe, the invention proposes the steps of:
- arranging a first insulation element on the pipe to form an inner insulation layer around the pipe, wherein the first insulation element comprises mineral wool;
- arranging support means on the pipe and adjacent to the first insulation element; and
- arranging a second insulation element on the support means arranged on the pipe to form an outer insulation layer whereby adjacent second insulation elements are arranged on the support means so that the second insulation elements directly abut on each other in axial direction of the pipe with their end faces.

The sequence of the steps may vary. Firstly, the support means may be arranged on the pipe and afterwards, the first insulation elements may be arranged adjacent to the support means. Alternatively, the first insulation elements may be arranged on the pipe first and afterwards the support means may be arranged between the first insulation elements.

It is important that the second insulation elements are not (only) arranged on the first insulation elements, but (mainly) on the support means. This means that the properties of the support for the second insulation elements depends only on the arrangement of the support means. The support of the insulation elements does not depend on the state of the first insulation elements. Therefore, the support of the second insulation elements is independent of the compression strength of the first insulation elements and/or the like.

Preferably, a fixation means is arranged on the outer insulation layer to keep it in position. The fixation means may be wrapped around the outer insulation layer. Preferably, an outer cladding may be arranged on the outer insulation layer. An air gap may be arranged between the outer insulation layer and the outer cladding.

Preferably, the support means comprises a stay arranged on the pipe in such a way that the stay protrudes radially to the pipe; and a curved plate connected to the stay in such a way that the plate extends axially and circumferentially to the pipe. This means that the support means is a segmented, multi-part element. On the one hand, this allows more flexibility when installing the support means. For example, the stays may be installed on the pipe first, afterwards the first insulation elements may be brought in position and subsequently, the curved plate may be arranged on the outer surfaces of the first insulation elements and connected to the stays. On the other hand, this multipart design of the support means also allows for example to pre-assemble the complete support means and mount it on the pipe as a single unit, before or after installation of the inner insulation layer.

Preferably, firstly the support means are arranged on the pipe and subsequently the first insulation elements are inserted into ducts being formed by the pipe on the one hand and the curved plate of the support means on the other hand. This allows a very easy installation of the insulation. The first insulation elements only have to be inserted into the duct and are then directly held in its position relative to the pipe. No further holding of the insulation elements or the like by a worker is necessary.

Further features of the present invention will become apparent by the embodiments described with reference to the enclosed figures now. The figures show:
- Fig. 1:: an axial sectional view through an embodiment of an inventive insulated pipe;
- Fig. 2:: an embodiment of the support means according to the invention; and
- Fig. 3:: a perspective sectional view of the pipe insulation system according to fig. 1 along the section line III-III.

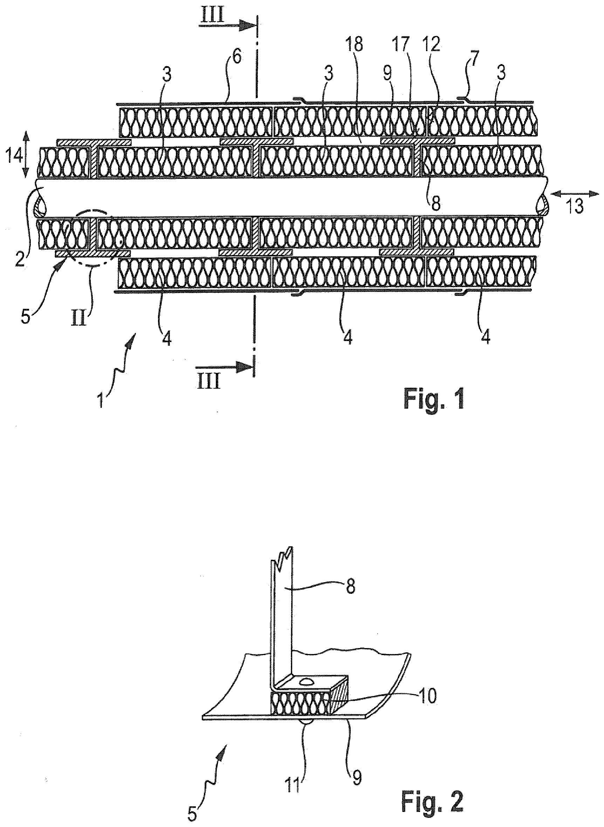

Fig. 1 shows an embodiment of an inventive insulated pipe assembly 1. Fig. 1 is a cross-sectional view in axial direction of the insulated pipe assembly 1. Fig. 1 shows a schematically view. There are gaps between the various elements, for making them more clear. Practically, it is preferred that there are no gaps at all.

In the middle, a pipe 2 is arranged. This pipe 2 is suitable for transport of hot fluids (liquid or gaseous). It may be made of any suitable material that can withstand high temperatures, i. e. > 300°C.

Around the outer surface of the pipe 2 are arranged first insulation elements 3. The first insulation elements 3 preferably have the form of pipe sections. The first insulation elements 3 are arranged on the outer surface of the pipe 2 with inner large surfaces. The first insulation elements abut on support means 5 with end faces in axial direction. The support means 5 are arranged on the pipe 2. The support means 5 are arranged between adjacent first insulation elements 3.

The support means 5 comprise stays 8 extending in radial direction 14 and a curved plate 9 extending in axial direction 13. The length of this curved plate 9 in axial direction 13 is substantially twice the thickness of the first insulation elements 3. In a specific embodiment the axial length of the curved plate 9 is between 10cm and 40cm, such as 30cm. With an axially length of the insulation elements 3 approximately 1 m a good support for the second insulation layer is provided. The curved plate 9 provides an outer surface 17. The outer surface 17 is a support for second insulation elements 4.

The second insulation elements 4 are arranged on the support means 5. The second insulation elements 4 are in direct contact with the outer surface 17. Therefore, the second insulation elements 4 are supported and kept in position by the support means 5. The first insulation elements 3 and the second insulation elements 4 may be spaced apart from each other by a cavity 18 as schematically shown, but preferably there is full contact between the first and second insulation elements. This means that the first insulation elements 3 and the second insulation elements 4 do not have to be in contact with each other. The support of the second insulation elements 4 may be realized by the support means 5 only.

A cladding 6 is arranged around the second insulation elements 4. The cladding 6 may be made of single cladding parts that are interconnected by a simple overlap 7. The cladding 6 is preferably made of thin metal sheet material as it is known in the art.

The second insulation elements 4 comprise end faces 12 in axial direction 13. Adjacent second insulation elements 4 directly abut on each other with the whole area of their end faces 12. This means that there are no elements arranged between adjacent second insulation elements 4. All of the second insulation elements 4 taken together form an integrated, uninterrupted outer insulation layer.

Moreover it can be seen from Fig. 1 that the abutting faces of the first and second insulation elements 3, 4 are shifted or arranged in a maze manner in the axial direction 13 of the pipe 2. This means that the end faces 12 of the second insulation elements 4 are not aligned with the end faces of the first insulation elements in the axial direction 13. Thermal bridges are avoided with this shifted or maze arrangement.

Fig. 2 discloses an embodiment of a part of a support means 5. This support means 5 is not integrally formed, but made of multiple parts. This support means 5 comprises a stay 8, a plate 9 being arranged rectangular to the stay 8 and a connection means 11 to connect the stay 8 and the curved plate 9 with each other. The end of the stay 8 that abuts on the pipe 2 may be V-shaped as shown to reduce heat transfer from the pipe 2 to the stay 8. Further, an insulation element 10 may be arranged between the stay 8 and the plate 9. The insulation element 10 has the purpose to reduce the effect of the support means 5 being a thermal bridge. The connection means 11 may be a stud, a pin, a screw or the like.

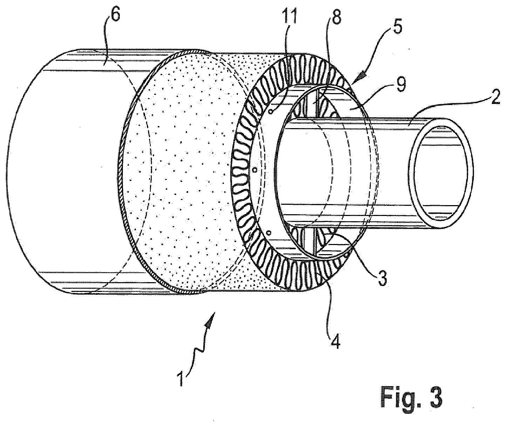

Fig. 3 shows a perspective view of the insulated pipe assembly 1 of fig. 1. Innermost the insulated pipe assembly 1, the pipe 2 is arranged. First insulation element 3 is arranged on the pipe 2. Moreover, the support means 5 are arranged on the pipe 2. The support means 5 comprise stays 8, which erect substantially radial to the pipe 2. The stays 8 support the curved plate 9. A stay 8 is connected to the curved plate 9 via the connection means 11, for example a screw. The curved plate 9 forms a ring, which is spaced both from the pipe 2 and the outer cladding 6.

The curved plate 9 is ring-shaped. It surrounds the pipe 2 and the first insulation element 3 circumferentially. The second insulation element 4 is arranged on the curved plate 9.

The support means 5 is preferably pre-assembled before it is mounted on the pipe 2. The curved plate 9 may consist of two half-circular plates with a plurality of inwardly protruding stays 8. These two half-circular plates are then mounted from either side of the pipe 2. Subsequently, the two half-circular plates are interconnected by connection means, e.g. screws, pins or the like. The stays 8 may only rest on pipe 2, without being directly interconnected with the pipe 2.

### List of Reference Numbers

- 1: insulated pipe assembly
- 2: pipe
- 3: first insulation element
- 4: second insulation element
- 5: support means
- 6: cladding
- 7: overlap
- 8: stay
- 9: curved plate
- 10: insulation element
- 11: connection means
- 12: end face
- 13: axial direction
- 14: radial direction
- 17: outer surface

## Claims

1. An insulated pipe assembly (1), comprising an insulation system and a pipe (2), which insulation system comprises a first insulation element (3) to form an inner insulation layer around the pipe (2), wherein the first insulation element (3) comprises mineral wool, and a second insulation element (4) to form an outer insulation layer around the inner insulation layer and support means (5), wherein
- the first insulation element (3) is arranged on the pipe (2);
- the support means (5) is arranged on the pipe (2) and adjacent to the first insulation element (3);
- the second insulation element (4) is arranged on and supported by the support means (5) arranged on the pipe (2), **characterised in that**
- adjacent second insulation elements (4) directly abut on each other in axial direction (13) of the pipe with their end faces (12).

2. The insulated pipe assembly (1) according to claim 1, comprising a plurality of first insulation elements (3) forming the inner insulation layer and a plurality of second insulation elements (4) forming the outer insulation layer, wherein abutting edges of the first insulation elements (3) and abutting edges of the second insulation elements (4) are shifted with respect to the axial direction (13) of the pipe (2).

3. The insulated pipe assembly (1) according to claim 1 or 2, wherein the upper surface (17) of the support means (5) overlaps the first insulation element (3) in axial direction (13) of the pipe (2).

4. The insulated pipe assembly (1) according to one of claims 1 to 3, wherein the support means (5) has an outer surface (17) that extends circumferentially around the pipe (2) and the inner insulation layer.

5. The insulated pipe assembly according to one of claims 1 to 4, wherein the second insulation element (4) comprises mineral wool.

6. The insulated pipe assembly according to one of claims 1 to 5, further comprising an outer cladding (6) to be arranged outside the second insulation layer.

7. The insulated pipe assembly according to one of claims 1 to 6, wherein the support means (5) comprises an outer surface (17) to be spaced apart from the pipe (2), on which outer surface (17) the outer insulation layer is supported.

8. The insulated pipe assembly according to claim 7, wherein a length of the upper surface (17) of the support means (5) in axial direction (13) of the pipe (2) is at least 50%, in particular at least 100%, preferably at least 150% of a thickness of the first and/or second insulation elements (3, 4).

9. The insulated pipe assembly according to one of claims 7 to 8, wherein the support means (5) comprises stays (8) to protrude radially to the pipe (2) and a curved plate (9) to extend axially to the pipe (2) and being connected to the stay (8), wherein the outer surface (17) is provided by the curved plate (9).

10. The insulated pipe assembly according to one of claims 1 to 9, wherein the support means (5) comprises a circumferentially shaped plate (9).

11. A method for insulating a pipe (2), comprising the steps of:
- arranging a first insulation element (3) on the pipe (2) to form an inner insulation layer around the pipe, wherein the first insulation element (3) comprises mineral wool;
- arranging support means (5) on the pipe and adjacent to the first insulation element (3); and
- arranging a second insulation element (4) on the support means (5) arranged on the pipe (2) to form an outer insulation layer whereby adjacent second insulation elements (4) are arranged on the support means (5) so that the second insulation elements (4) directly abut on each other in axial direction (13) of the pipe with their end faces (12).

12. The method according to claim 11, wherein the support means (5) comprises
a stay (8) that is arranged on the pipe (2) in such a way that the stay (8) protrudes radially to the pipe (2); and
a curved plate (9) connected to the stay (8) in such a way that the curved plate (9) extends axially and circumferentially to the pipe on the outside of the inner insulation layer.

13. The method according to claim 11 or 12, wherein firstly the support means (5) are arranged on the pipe (2) and subsequently the first insulation element (3) is inserted into a duct being formed by the pipe (2) on the one hand and a part of the support means (5) extending axially to the pipe (2) on the other hand.

## Patentansprüche

1. Isolierrohranordnung (1) mit einem Isoliersystem und einem Rohr (2), wobei das Isoliersystem ein erstes Isolierelement (3) zur Bildung einer inneren Isolierschicht um das Rohr (2) herum aufweist, wobei das erste Isolierelement (3) Mineralwolle aufweist, und ein zweites Isolierelement (4) zur Bildung einer äußeren Isolierschicht um die innere Isolierschicht herum und eine Tragvorrichtung (5), wobei
- das erste Isolierelement (3) auf dem Rohr (2) angeordnet ist;
- die Tragvorrichtung (5) auf dem Rohr (2) und angrenzend an das erste Isolierelement angeordnet ist;
- das zweite Isolierelement (4) auf der auf dem Rohr (2) angeordneten Tragvorrichtung angeordnet und von dieser getragen ist, **dadurch gekennzeichnet, dass**
- aneinander angrenzende zweite Isolierelemente (4) direkt in axialer Richtung (13) des Rohrs mit ihren Endflächen (12) aneinander anstoßen.

2. Isolierrohranordnung (1) gemäß Anspruch 1, mit einer Vielzahl erster Isolierelemente (3), die eine innere Isolierschicht bilden, und einer Vielzahl zweiter Isolierelemente (4), die eine äußere Isolierschicht bilden, wobei Stoßkanten der ersten Isolierelemente (3) und Stoßkanten der zweiten Isolierelemente (4) bezüglich der axialen Richtung (13) des Rohrs (2) versetzt zueinander angeordnet sind.

3. Isolierrohranordnung (1) gemäß Anspruch 1 oder 2, wobei die obere Fläche (17) der Tragvorrichtung (5) das erste Isolierelement (3) in axialer Richtung (13) des Rohrs (2) überlappt.

4. Isolierrohranordnung (1) gemäß einem der Ansprüche 1 bis 3, wobei die Tragvorrichtung (5) eine Außenfläche (17) aufweist, die sich umlaufend um das Rohr (2) und die innere Isolierschicht erstreckt.

5. Isolierrohranordnung gemäß einem der Ansprüche 1 bis 4, wobei das zweite Isolierelement (4) Mineralwolle aufweist.

6. Isolierrohranordnung gemäß einem der Ansprüche 1 bis 5, ferner aufweisend eine äußere Verkleidung (6), welche außerhalb der zweiten Isolierschicht anzuordnen ist.

7. Isolierrohranordnung gemäß einem der Ansprüche 1 bis 6, wobei die Tragvorrichtung (5) eine Außenfläche (17) aufweist, die mit Abstand von dem Rohr (2) anzuordnen ist, und auf welcher Außenfläche (17) die äußere Isolierschicht getragen ist.

8. Isolierrohranordnung gemäß Anspruch 7, wobei eine Länge der oberen Fläche (17) der Tragvorrichtung (5) in axialer Richtung (13) des Rohrs (2) zumindest 50%, insbesondere zumindest 100%, vorzugsweise zumindest 150% einer Dicke des ersten und/oder des zweiten Isolierelementes (3, 4) beträgt.

9. Isolierrohranordnung gemäß einem der Ansprüche 7 bis 8, wobei die Tragvorrichtung (5) Streben (8) aufweist, die radial zu dem Rohr (2) hervorragen, und eine gebogene Platte (9), die sich axial zu dem Rohr (2) erstreckt und mit der Strebe (8) verbunden ist, wobei die Außenfläche (17) von der gebogenen Platte (9) bereitgestellt ist.

10. Isolierrohranordnung gemäß einem der Ansprüche 1 bis 9, wobei die Tragvorrichtung (5) eine umlaufend geformte Platte (9) aufweist.

11. Verfahren zur Isolierung eines Rohrs (2), aufweisend die Schritte:
- Anordnung eines ersten Isolierelementes (3) auf dem Rohr (2) zur Bildung einer inneren Isolierschicht um das Rohr herum, wobei das erste Isolierelement (3) Mineralwolle aufweist;
- Anordnung einer Tragvorrichtung (5) auf dem Rohr und angrenzend an das erste Isolierelement (3); und
- Anordnung eines zweiten Isolierelementes (4) auf der auf dem Rohr (2) angeordneten Tragvorrichtung (5) zur Bildung einer äußeren Isolierschicht, wobei benachbarte zweite Isolierelemente (4) auf der Tragvorrichtung (5) derart angeordnet werden, dass die zweiten Isolierelemente (4) direkt in axialer Richtung (13) des Rohrs mit ihren Endflächen (12) gegeneinander stoßen.

12. Verfahren gemäß Anspruch 11, wobei die Tragvorrichtung (5)
- eine Strebe (8) aufweist, die derart auf dem Rohr angeordnet ist, dass die Strebe (8) radial zu dem Rohr vorspringt, und
- eine gebogene Platte (9), die derart mit der Strebe (8) verbunden ist, dass sich die gebogene Platte (9) axial und umfangsmäßig zu dem Rohr auf der Außenseite der inneren Isolierschicht erstreckt.

13. Verfahren gemäß Anspruch 11 oder 12, wobei erstens die Tragvorrichtung (5) auf dem Rohr (2) angeordnet wird und nachfolgend einerseits das erste Isolierelement (3) in einen von dem Rohr (2) gebildeten Kanal eingeführt wird und andererseits ein Teil der Tragvorrichtung (5) sich axial zu dem Rohr (2) erstreckt.

## Revendications

1. Ensemble d'isolation de tuyau (1) comprenant un système d'isolation et un tuyau (2), lequel système d'isolation comprend un premier élément d'isolation (3) pour former une couche d'isolation intérieure autour du tuyau (2), dans lequel le premier élément d'isolation (3) comprend de la laine minérale, et un deuxième élément d'isolation (4) pour former une couche d'isolation extérieure autour de la couche d'isolation intérieure, et un moyen de support (5), dans lequel
- le premier élément d'isolation (3) est disposé sur le tuyau (2),
- le moyen de support (5) est disposé sur le tuyau (2) et adjacent au premier élément d'isolation (3) ;
- le deuxième élément d'isolation (4) est disposé sur et porté par le moyen de support (5) disposé sur le tuyau (2), **caractérisé en ce que**
- des deuxièmes éléments d'isolation (4) adjacents buttent directement l'un contre l'autre dans la direction axiale (13) du tuyau avec leurs faces d'extrémité (12).

2. Ensemble d'isolation de tuyau (1) selon la revendication 1, comprenant une pluralité de premiers éléments d'isolation (3) formant la couche d'isolation intérieure et une pluralité de deuxièmes éléments d'isolation (4) formant une couche d'isolation extérieure, des bords d'aboutement des premiers éléments d'isolation (3) et des bords d'aboutement des deuxièmes éléments d'isolation (4) étant décalés par rapport à la direction axiale (13) du tuyau (2).

3. Ensemble d'isolation de tuyau (1) selon la revendication 1 ou la revendication 2, dans lequel la surface supérieure (17) du moyen de support (5) recouvre le premier élément d'isolation (3) dans la direction axiale (13) du tuyau (2).

4. Ensemble d'isolation de tuyau (1) selon l'une des revendications 1 à 3, dans lequel le moyen de support (5) comprend une surface extérieure (17), qui s'étend de façon circonférentielle autour du tuyau (2) et de la couche d'isolation intérieure.

5. Ensemble d'isolation de tuyau (1) selon l'une des revendications 1 à 4, dans lequel le deuxième élément d'isolation (4) comprend de la laine minérale.

6. Ensemble d'isolation de tuyau (1) selon l'une des revendications 1 à 5, comprenant en outre un revêtement extérieur (6) à disposer à l'extérieur de la deuxième couche d'isolation.

7. Ensemble d'isolation de tuyau (1) selon l'une des revendications 1 à 6, dans lequel le moyen de support (5) comprend une surface extérieure (17), qui est à écarter du tuyau (2), sur laquelle surface extérieure (17) est portée la couche d'isolation extérieure.

8. Ensemble d'isolation de tuyau selon la revendication 7, dans lequel une longueur de la surface supérieure (17) du moyen de support (5) dans la direction axiale (13) du tuyau (2) est au moins 50%, notamment au moins 100%, de préférence au moins 150% d'une épaisseur du premier et/ou du deuxième élément d'isolation (3, 4).

9. Ensemble d'isolation de tuyau selon l'une des revendications 7 à 8, dans lequel le moyen de support (5) comprend des entretoises (8), qui font radialement saisie par rapport au tuyau (2) et une plaque courbée (9), qui s'étend axialement au tuyau (2) et qui est reliée à l'entretoise (8), dans lequel la surface extérieure (17) est fournie par la plaque courbée (9).

10. Ensemble d'isolation de tuyau selon l'une des revendications 1 à 9, dans lequel le moyen de support (5) comprend une plaque (9) en forme circonférentielle.

11. Procédé d'isolation d'un tuyau (2), comprenant les étapes de :
- disposer un premier élément d'isolation (3) sur le tuyau (2) pour former une couche d'isolation intérieure autour du tuyau, le premier élément d'isolation (3) comprenant de la laine minérale ;
- disposer un moyen de support (5) sur le tuyau et de manière adjacente au premier élément d'isolation (3) ; et
- disposer un deuxième élément d'isolation (4) sur le moyen de support (5) disposé sur le tuyau (2) pour former une couche d'isolation extérieure, des deuxièmes éléments d'isolation adjacents (4) étant disposés sur le moyen de support (5) de sorte que les deuxièmes éléments d'isolation (4) buttent directement les uns contre les autres avec leurs faces d'extrémité (12) dans la direction axiale du tuyau.

12. Procédé selon la revendication 11, dans lequel le moyen de support (5) comprend
une entretoise (8), qui est disposée sur le tuyau (2) de sorte que l'entretoise (8) fait radialement saillie par rapport au tuyau (2) ; et
une plaque courbée (9) reliée à l'entretoise (8) de sorte que la plaque courbée (9) s'étend axialement et de façon circonférentielle au tuyau sur l'extérieur de la couche d'isolation intérieure.

13. Procédé selon la revendication 11 ou la revendication 12, dans lequel d'abord les moyens de support (5) sont disposés sur le tuyau et ensuite le premier élément d'isolation (3) est inséré dans un canal formé par le tuyau (2), d'une part, et une partie du moyen de support (5) s'étend axialement au tuyau (2), d'autre part.
